# EUROPEAN PATENT SPECIFICATION

(11) **EP 0 480 436 B1**
(45) Date of publication and mention of the grant of the patent: **07.08.1996**
(21) Application number: 91117319.3
(22) Date of filing: 10.10.1991
(51) Int. Cl.: B65G 47/26, B65B 35/30, B65G 47/08, B65G 47/71

(54) **Distributing and collecting device for products to be conveyed**
Einrichtung zum Verteilen und Sammeln von zu fördernden Produkten
Dispositif pour distribuer et ramasser des produits à transporter

(30) Priority: 11.10.1990 JP 273006/90
(43) Date of publication of application: 15.04.1992
(73) Proprietor: Tetra Laval Holdings & Finance SA, 1009 Pully (CH)
(72) Inventor: Ebira, Shusaku, Takatsuki-shi, Osaka (JP)
(74) Representative: Hering, Hartmut, Dipl.-Ing.

(56) References cited:
- EP-A- 0 174 596
- DE-A- 2 638 280
- DE-A- 3 122 733
- DE-A- 3 923 549
- US-A- 2 726 751
- US-A- 3 193 078
- US-A- 4 723 649
- PATENT ABSTRACTS OF JAPAN vol. 9, no. 279 (M-427)(2002) 7 November 1985 &JP-A-60 122 619 ( SHINOOSAKA ZOUKI ) 1 July 1985

## Description

The present invention generally relates to a distributing and collecting device for products to be conveyed that is designed to be linked to a product-discharging end of a carrier conveyor and distributes and collects products that are supplied one after another into a predetermined number of rows in sets of a fixed number. Namely such a device is used for a secondary treatment such as shrink-packaging of combined liquid food packs that are conveyed on a conveyor.

In DE-A-26 38 280 there is disclosed and described a distributing and collecting device for products to be conveyed as set out in the preamble of claim 1.

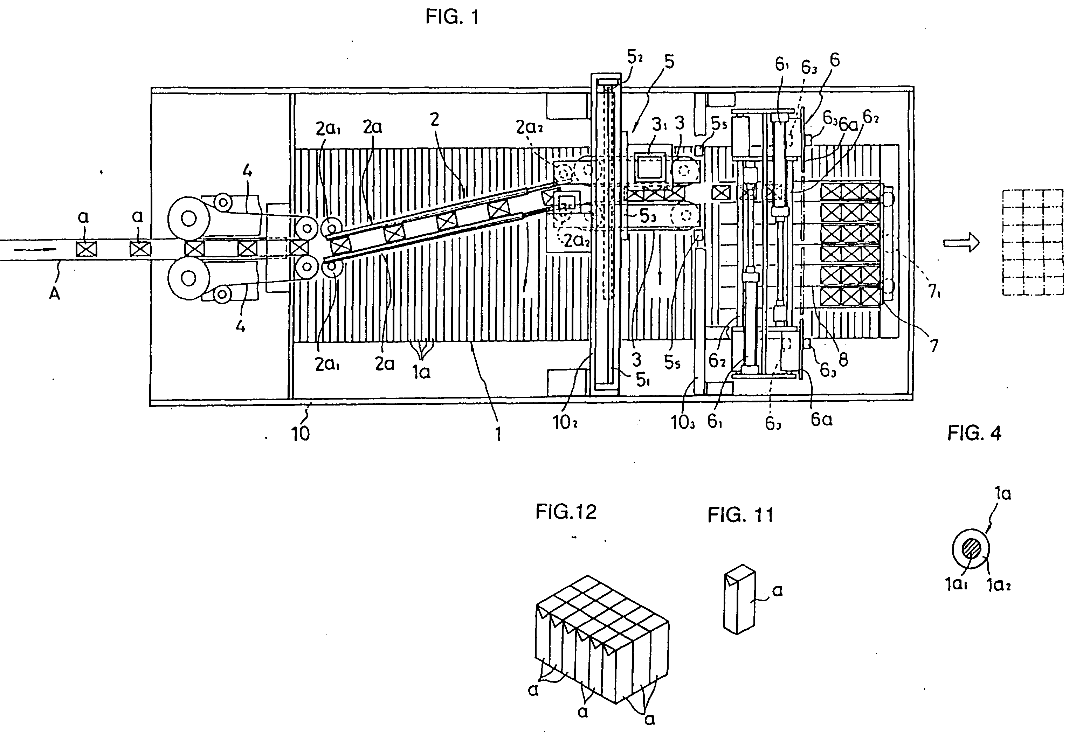

Conventionally, in order to collect multiple products in sets, if the products are parallelepipedic tubes such as liquid food packages, a device has been used in which vertical conveyors are disposed on both sides at the end of a carrier conveyor, wherein these vertical conveyors are operated more slowly than the carrier conveyor, thereby applying braking forces to both sides of the products that are conveyed one after another in order to narrow the gaps between them so that they are getting in contact with each other. The term "vertical conveyor" as used in the specification and claims means a pair of endless conveyors moving about vertically disposed axes and transporting products while sandwiching them. Furtheron, when a certain amount of the products is discharged, said vertical conveyors are stopped temporarily so that a row of discharged products that are stopped on the carrier conveyor in the mutually contacted condition are pushed in a direction perpendicular to the running direction using a pusher. All actions are repeated for a predetermined number of times so that the produts are distributed into a predetermined number of rows in sets of a fixed amount and collected hereby (see Japanese Tokkai No. 61-64627, Fig. 1).

A second device, which does not use a pusher, directs a row of products to be conveyed between parallel guides that oscillate horizontally on a wide conveyor and distributes them into multiple rows in sets of a fixed amount and stops them for collecting. For example, Japanese Jikkosyo 46-27334, Fig. 1 illustrates products (bottles with a flat circular section) being distributed and collected, wherein the products are distributed by parallel guides that oscillate on a wide conveyor and stopped by a stopper gate (not shown).

Among the conventional collecting devices, in the first-mentioned conventional collecting device using a pusher there occur the later mentioned problems.

After a row of predetermined number of products (such as packages in sets of four) that are discharged via vertical conveyors at the end of the carrier conveyor and stopped on the subsequent conveyor, are pushed transversely (in the direction perpendicular to the running direction of the conveyor), a space has to be recovered for the next row to place the row in front of the pusher to be pushed thereby. This inevitably results in a time loss. Since the above effect repeats several times in the course of collecting products, the collecting speed cannot be increased.

The second device using guides that horizontally oscillate on a wide conveyor to distribute products into a predetermined number of rows in sets of a fixed amount and a stopper gate for stopping the products to be collected, suffers from the following problem resulting in rendering it difficult to increase the collecting speed. After a predetermined number of products are collected in multiple rows and discharged, said stopper gate is used again to continually stop and collect the distributed products. If the collecting speed is increased, the products tend to accumulate in front of the gate, thereby disabling accurate distribution of the products.

Therefore, the primary object of the present invention is to overcome the above mentioned problems inherent to the prior art devices and to provide a distributing and collecting device for products to be conveyed which is able to distribute products into a predetermined number of rows in sets of a predetermined amount and to collect them faster and more accurately than heretofore.

In accordance with the present invention there is provided a distributing and collecting device for products to be conveyed, which distributes and collects products that are supplied from a carrier conveyor one after another into a predetermined number of rows in sets of a fixed amount, comprising at least:
a) a wide conveyor,
b) a conveying-direction sorting guide,
c) a product-distributing means,
d) a first gate, and
e) a second gate,
   wherein said wide conveyor has a front end that is connected to the end of the carrier conveyor, extends to the product-distributing and collecting area, and has a width dimension sufficient to carry a predetermined number of rows of products;
   said conveying-direction sorting guide has, near the upper surface of said wide conveyor, a front end for receiving products from said carrier conveyor and an oscillatable rear end for discharging said products;
   said first gate opens or closes perpendicularly to the conveying direction above the wide conveyor at a predetermined distance from said product-distributing means;
   said second gate is disposed at a predetermined distance from the first gate in such a manner that it is movable up and down to block the products on the wide conveyor; and after the products are temporarily stored in multiple rows in sets of a fixed amount at said first gate, said first gate opens and said second gate distributes and collects the products into multiple rows in sets of a fixed amount;
characterized in that
said product-distributing means comprising a mutually facing pair of vertical conveyors above the wide conveyor;
said front ends of the vertical conveyors are connected to the rear end of said guide and convey the products in the conveying direction by sandwiching them at about the same speed and the same direction as said wide conveyor, in such a manner that when the vertical conveyors discharge a predetermined number of products from the end row position, the discharging part moves to the row position adjacent to the current row position in sequence so as to move reciprocally between the rows at both ends; and the vertical conveyor can be stopped temporarily when a predetermined number of products are discharged.

For improving the effectiveness of the above distributing and collecting device for products to be conveyed said device preferably comprises:
a) said first gate opens to the left and right, and said first gate and said second gate are driven in such a manner that the movement of said vertical conveyors causes products to be discharged from either end row position of said multiple rows and accumulated one after another at each row position in a predetermined number, and when the products are accumulated at a row position preceding another end row position, said first gate opens and at the same time a predetermined number of rows of products pass said gate so that it is detected when a predetermined number of products is accumulated at said second gate, to cause the first gate to close and in turn products are supplied one after another from the other end row position. On the other hand,
b) the second gate opens to let pass the accumulated products to the next line so that when a predetermined number of products are all transported, said second gate rises up to stop the subsequent products.

Preferably the wide conveyor has multiple rows of small diameter rollers and further comprising:
a) mutually adjacent shafts that are arranged perpendicular to the conveying direction and rotated and driven in the conveying direction; and
b) multiple peripheral rollers that are joined to said shafts in such a manner that they are rotatable by friction.

According to a preferred embodiment the distributing and collecting device for products to be cnveyed there is provided a product-distributing means comprising:
a) a pair of mutually facing vertical conveyors that are disposed above the wide conveyor in such a manner that they are movable in the direction perpendicular to the conveying direction of said wide conveyor, and
b) optical sensors that are such located that their light paths cross the products-discharging end; wherein when the optical sensors detect a predetermined number of products, the discharging part of the vertical conveyor moves to the row position adjacent to the current one in the above-mentioned multiple rows.

Preferably said conveying-direction sorting guide has mutually facing hinges at the front end and rear end so that the distance between the front end and rear end can be varied with a combination of pipes and shafts.

The effects and the operation of the distributing and collecting device according to the invention are described as follows.

When the distributing and collecting device for products to be conveyed of the type referred to above is disposed at the end of the single-row product-carrier conveyor to feed products such as liquid food packages from the carrier conveyor, said products are fed into the conveying-direction sorting guide from its front end and conveyed, wherein the rear end of the sorting guide being able to oscillate on the wide conveyor that is connected to the end of the carrier conveyor. At this time, the conveying direction of the products is changed according to the oscillating position of the guide, and the products are fed into the pair of mutually facing vertical conveyors i.e., the product-distributing means that is disposed downstream of the wide conveyor. The products conveyed into the vertical conveyors through the conveying-direction sorting guide are sandwiched by the vertical conveyors that move at about the same speed as the running speed of the wide conveyor so as to control discharging into the proper row position.

The vertical conveyors move back and forth between the multiple rows into which products are distributed, in such a manner that when a predetermined number of products are discharged at the end row position, the vertical conveyors stop discharging the products and the product-discharging part moves on to the next row in sequence. In this case, the products are first accumulated in multiple rows each having a predetermined number of products in front of the first gate and blocked or stopped there temporarily before they are collected at the second gate. When increasing the distributing speed to increase the collecting speed, products to be conveyed are distributed and collected into a predetermined number of rows each having a predetermined number of products much faster as compared to the case with only one gate. In this case products are added to other products that were conveyed previously and accumulated into a predetermined number of rows in sets of a predetermined number of products in front of the gate, and blocked there.

In this case, by making the first gate open from the center to the left and right, a cylinder having a long stroke which is required for a single-flap opening gate is not necessary. Also, by arranging the first gate to open when the products are accumulated up to the row position next to the last row position where products are to be accumulated, a predetermined number of products in the last row, i.e., the end row of the multiple rows, is conveyed on the wide conveyor without being blocked by the first gate. Therefore the products that are distributed and accumulated in front of the first gate can be pushed out to the second gate faster, allowing the second gate to collect them faster. Also by opening the first gate to the left and right and making the second gate to rise from the lower position to block the products, the bottom surface of the product would not move further than the upper surface of the product as in the case when the gate descends from above. Thus a falling down of the products is prevented.

The wide conveyor conveys the products through the conveying-direction sorting guide to the second gate where the products are finally collected by multiple rows of small-diameter rollers that are disposed perpendicular to the conveying direction and adjacent to each other and are rotated and driven. Each of these small-diameter rollers has a shaft and multiple peripheral rollers that are joined so as to be able to rotate by friction. This arrangement especially permits a conveying of slim and tall packages having a relatively small bottom such as drink packages. To the botttoms of the products to be conveyed is applied a forwarding action caused by the rotational driving force combined with multiple linear contact, when the conveyed products stop or start on the conveyor. Caused by inertia the conveyed products are pushed and frictional forces between the bottoms of the products and the surface of the conveyor are reduced due to the linear contact and slipping at the frictional joint between the roller and the shaft. Therefore a falling down of the products is prevented.

After the pair of vertical conveyors, i.e. the productdistributing means, has discharged a predetermined number of products via the discharging part, the discharging part moves to the next following row position so that it moves back and forth between the above-mentioned multiple rows.

In this case, by disposing the vertical conveyors on the wide conveyor in a movable manner and perpendicular to the conveying direction, products can be more smoothly discharged to the gate and accumulated faster as compared to the case using a conventional oscillating guide in which the product-discharging part moves along an arc while changing angles, under the same condition and especially when the cross section of the product is rectangular. By disposing the optical sensors in such a manner that their light path is positioned at the product-discharging end of the vertical conveyors and arranging the discharging part to move to the next row of the multiple rows a predetermined number of products is detected and the movement of the vertical conveyors is smoothly controlled by counting how many times the light path between the optical sensors is interrupted to know the number of products discharged.

Furthermore, the conveying-direction sorting guide is disposed so that the distance between its front end and the rear end can be extended or shortened by combining pipes and shafts. Thus this guide is variable to smoothly lead and move the products from the guide to the vertical conveyors, i.e. the product-distributing means, even when said guide oscillates and the vertical conveyors are positioned at the end row position of the above-mentioned multiple rows, provided that the vertical conveyors are disposed in such a way that they can move in the direction perpendicular to the running direction of the wide conveyor.

According to the embodiment described in claim 1, products conveyed in a single row are distributed and collected into a predetermined number of rows of a certain number of pieces each on a wide conveyor in such a manner that after the products have been temporarily blocked and collected at the first gate (i.e. temporarily stored), they are conveyed and collected properly in front of the second gate. Therefore even if the distributing speed is increased and the following products are continuously sorted and distributed, it is possible to prevent a holdup of products caused by over accumulation as in the case of a conventional device. Resulting therefrom products can be collected into multiple rows of a pretermined number at a higher speed to increase production efficiency by speeding up secondary treatment processes such as shrink-packaging.

According to the embodiment described in claim 2, conveyed products are temporarily collected and stored in front of the above-mentioned first gate before conveying them to the second gate, in such a manner that only the last row of the multiple rows of collected products of a predetermined number is conveyed to the second gate without being blocked by the first gate, thereby eliminating a time loss and increasing product-collecting speed in front of the second gate.

According to the embodiment described in claim 3, the wide conveyor that conveys products from a single-row condition until they are properly distributed and collected, is formed by multiple rows of small-diameter rollers comprising multiple peripheral rollers rotationally joined with shafts by friction. Therefore there is less influence caused by friction between the bottom of said products and the surface of the conveyor. Even if the products to conveyed are tall in relation to the bottom area, stop and go, they can be conveyed and collected on the wide conveyor in a stable manner without falling down.

According to the embodiment described in claim 4, the vertical conveyors, i.e. the product-distributing means, are arranged to move in the direction perpendicular to the conveying direction of the wide conveyor, so as to discharge products, especially products with a rectangular cross section, in the same condition regardless of the row position, i.e. whether at the end or middle of the above-mentioned multiple rows, without an angle. In combination therewith a product-counting method using optical sensors is carried out. The light paths of the sensors are interrupted by passing products. Thus products are accurately and smoothly distributed and collected at higher speed.

According to the embodiment described in claim 5, the conveying direction sorting guide is defined by pipes and shafts so that the products are guided smoothly from said guide to the vertical conveyors moving in a direction perpendicular to the conveying direction at the wide conveyor.

The foregoing and other objects, features and advantages of the invention will be apparent from the following more particular description of preferred embodiments of the invention as illustrated in the accompanying drawings, in which:
- Fig. 1: is a plan view of the entire device of the present invention when products to be conveyed are distributed and collected;
- Fig. 2: is a side view of Figur 1;

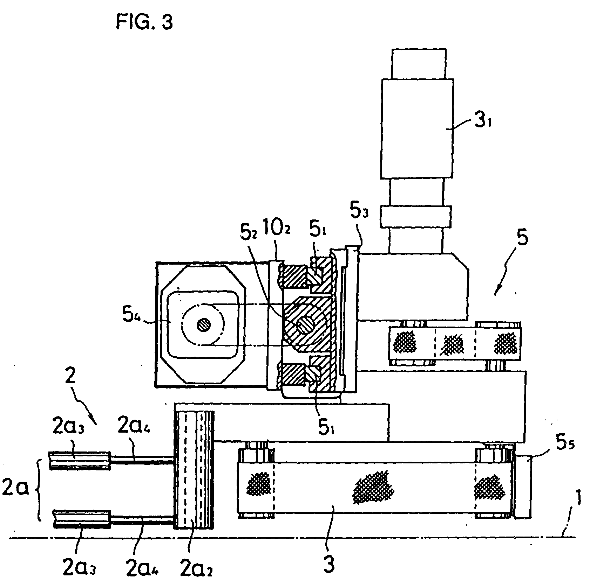

- Fig. 3: is a partially enlarged side view of a product-distributing means of the device;
- Fig. 4: is an enlarged section view of a small diameter roller of a wide conveyor;
- Figs. 5 to 10: are plan views showing in sequence a distributing condition of predetermined number of products and the relationship to the first gate respectively;
- Fig. 11: is a perspective view of an example of a product that is to be distributed and collected, and
- Fig. 12: is a perspective view of an example of distrubuted and collected products in tightly collected condition.

A preferred embodiment of the present invention will now be described with reference to the accompanying drawings.

The embodiment described in the accompanying drawings relates to the case in which a product (drink pack) shown in Figur 11 is distributed and collected in an aggregate of 3 pieces x 6 rows as shown in Figur 12. In other words, the device of the present invention distributes products into six rows of three pieces each. Small gaps between the rows are eliminated using guides, etc., that are located on the left and right of the aligned and collected products of six rows when pushing them out to the next line to make every package contact each other. Then the collected packages are grasped by a U-shaped blank and provided with a predetermined secondary treatment such as shrink-packaging, etc..

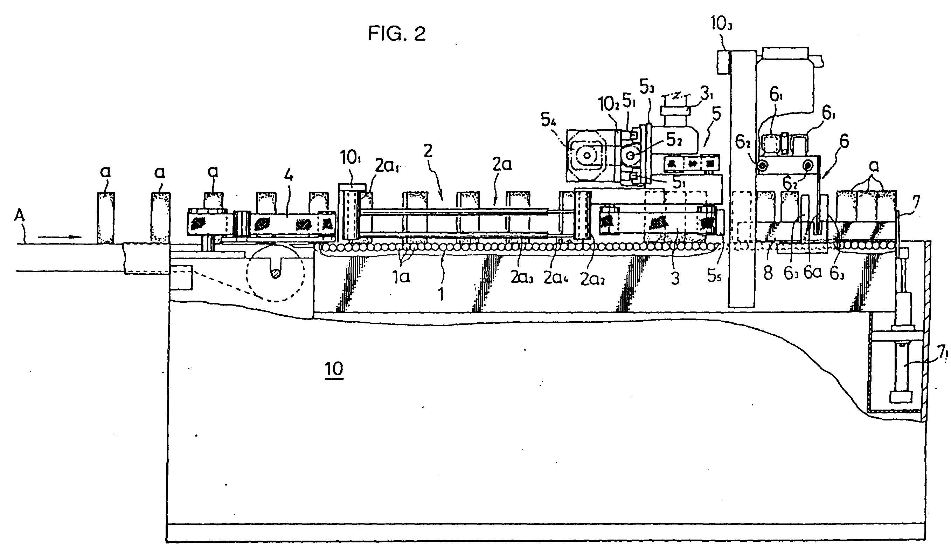

Figures 1 and 2 show a plan view and a side view of the entire device, in which the products a supplied one after another on the carrier conveyor A move through the vertical conveyors 4, 4 that are disposed on both sides of the end of the carrier conveyor A to control supply of the products going downstream. More specifically, when the conveyors 4, 4 stop feeding the products, supply of the sandwiched products a to the distributing and collecting device downstream is stopped, and when the conveyors 4, 4 are driven, the products are continuously supplied to a front end opening of a conveying-direction sorting guide 2 of the distributing and collecting device, so that the supply of the products is finely adjusted to the working condition (i.e. distributing and collecting condition or occurrence of troubles, etc.) of the distributing and collecting device.

Downstream from below the product-discharging part at the end of the above-mentioned pair of mutually facing vertical conveyors 4, 4 a wide conveyor 1 of a predetermined width that can convey multiple rows of products is disposed extending up to the immediate front of a second gate 7 (described later) for product-collecting at a prescribed height on the main body frame 10. Said wide conveyor 1 comprises multiple rows of small-diameter rollers 1a.

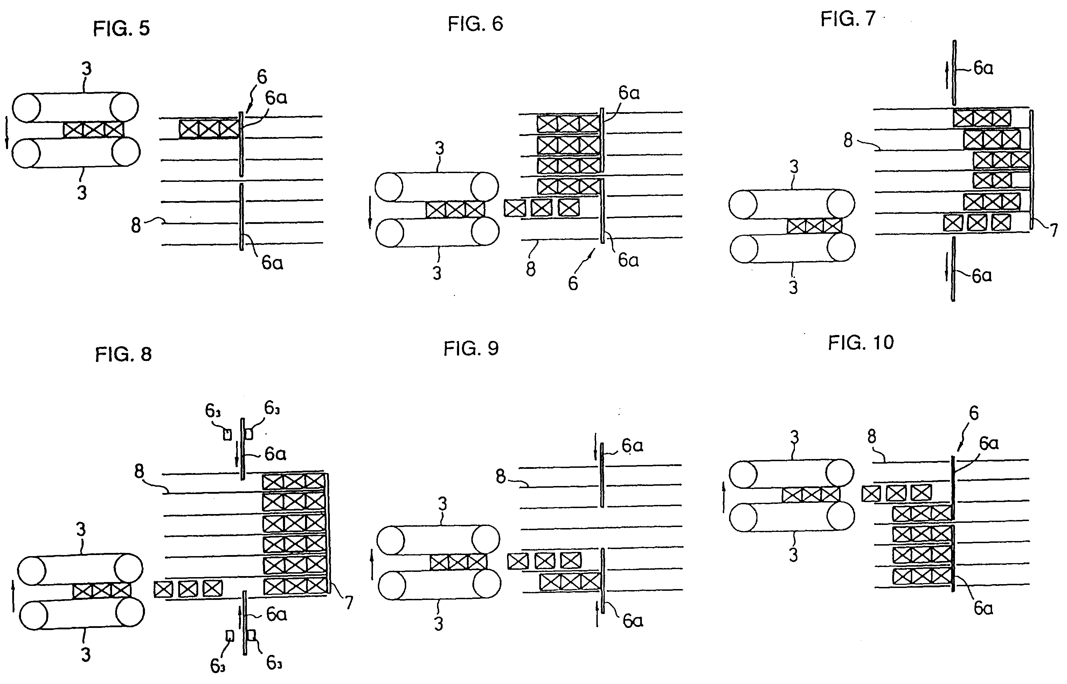

Each small-diameter roller comprises a shaft 1a₁ that is arranged perpendicular to the conveying direction and arranged one next to another and is rotated and driven in the conveying direction (clockwise in Figur 2) and a peripheral plastic roller 1a₂ on said shaft, which are mutally joined by friction so as to be able to rotate (see Figur 4). Thus when tall products a with a relatively small height compared to the bottom area are conveyed, influence caused by the friction between the bottom of the product and the surface of the conveyor (horizontally applied force on said bottom) is reduced when the product a starts or stops due to a slip between the shaft 1a₁ and the peripheral rolle 1a₂ and a linear contact between the roller surface and the bottom of the product. Thereby a falling down of the products is prevented.

Adjacent to the product-discharging outlet of the pai of mutually facing vertical conveyors 4, 4 for the above-mentioned supply control, the front ends of mutually facing side guide parts 2a, 2a that define the conveying-direction sorting guide 2 face each other with a distance just a little larger than the width of the product a between them. These guide parts 2a, 2a are suspended by hinge-joints 2a₁, 2a₁ at the frame board 10₁ that is horizontally mounted on the main body frame 10 above the wide conveyor 1. The rear ends of the side guide parts 2a, 2a of the sorting guide 2 are connected to the entrance of vertical conveyors 3, 3 that are disposed on the main frame 10 over the wide conveyor 1 at a predetermined distance from the product-discharging outlet of the above-mentioned supply control vertical conveyors 4, 4 in such a manner that they can move perpendicularly to the conveying direction on the product-distributing means 5. In other words, said rear ends are joined by hinges 2a₂, 2a₂ at positions adjacent to the entrance of the pair of vertical conveyors 3, 3 that are disposed so as to hang from above over the wide conveyor 1 to transport products while sandwiching them. When said vertical conveyors 3, 3 move perpendicularly to the conveying direction of the wide conveyor 1, the above-mentioned mutually facing side guide parts 2a, 2a guide the conveyed products a between the side guide parts 2a, 2a facing each other and oscillating around front end hinge parts 2a₁, 2a₁, the products are led into the entrance of the pair of mutually facing vertical conveyors 3, 3 of the product-distributing means 5. Each of the above-mentioned side guide parts 2a, 2a consists of a vertically arranged pair of pipes 2a₃ and shafts 2a₄ that are inserted into the pipe holes so that they may be extended or shortened freely. Therefore, even when the conveying line of the vertical conveyors 3, 3 of the product-distributing means 5 is at either extreme end positon when the distributing line is allocated in three rows both left and right of the center of the above-mentioned carrier conveyor A, the side guide parts 2a, 2a are extended to smoothly lead the products a from said guide 2 to the space between the vertical conveyors 3, 3.

The product-distributing means 5 that is located downstream of the guide 2 and linked with the rear end of the above-mentioned conveying-direction sorting guide 2 is disposed above the wide conveyor 1 on the main body frame 10 so as to straddle over the above-mentioned wide conveyor 1. More specially, at the distributing means 5, a pair of vertical conveyors 3, 3 are vertically disposed via a moving part 5₃ that is moved in a direction perpendicular to the conveying direction by a ball screw 5₂ that is guided by a pair of rails 5₁, 5₁ vertically disposed in parallel on a frame board 10₂ mounted horizontally on supports on b oth sides (i.e. above and below in Figur 1) of the conveying direction of the wide conveyor 1 driven by a motor 5₄. Said vertical conveyors 3, 3 are driven at about the same speed as the conveying speed of the wide conveyor 1, and controls discharging of products conveyed via the conveying-direction sorting guide 2 to the proper rows by sandwiching them between the mutually facing vertical conveyors 3, 3. On both sides of the product-discharging outlet of vertical conveyors 3, 3 there is arranged a pair of optical sensors 5₅, 5₅ in such a way that the light path crosses the product-discharging outlet. For example when three products are discharged passing the light path, the sensors 5₅, 5₅ detect this condition and accordingly the transporting path of the vertical conveyors 3, 3 moves to the adjacent row position. After the products are discharged at the end row position, means (not shown) move the transporting path backward and the products thereon being counted and discharged at one row after another. When starting the operation, a button (not shown) is used to move the above-mentioned vertical conveyors 3, 3 to the extreme end row position (leftmost position in the embodiment) and the discharging of the products a is started.

Downstream of the above-mentioned product-distributing means 5 and above the wide conveyor 1, there is disposed a first gate 6, having flaps 6a, 6a that open to the left and right from the middle, and vertically hung from a frame board 10₃, which straddles over the above-mentioned wide conveyor 1, at a predetermined distance from the conveyor surface, in order to temporarily store the products to be distributed at a predetermined distance from the discharging outlet of the vertical conveyors 3, 3 of said product-distributing means 5. The flaps 6a, 6a of said gate 6 are separately driven by cylinders 6₁, 6₁, and are opened or closed while being guided by guide rods 6₂, 6₂. On both sides of the wide conveyor 1, optical sensors 6₃, 6₃ are arranged near the front or rear of the flaps 6a, 6a in order to detect passing of the products.

The end of the above-mentioned wide conveyor 1 is located at a predetermined distance downstream of the first gate 6, and a second gate 7 of a predetermined width is located so as to almost contact said end leaving a very small gap in such a manner that it can ascend from below the wide conveyor 1 to a predetermined height by a cylinder 7₁. Thus the conveyed products are collected into six rows of three pieces each in front of said second gate 7.

Thin partitions 8 of a predetermined height are disposed on the wide conveyor 1 from a place just downstream of the area where the above-mentioned product-distributing vertical conveyors 3, 3 move, up to the immediate front of the second gate 7 with a predetermined distance between them to partition or separate products that are discharged and distributed by said vertical conveyors 3, 3.

The device of the present invention, which is constructed as described above, distributes and collects products a that are conveyed in a single row in the following manner. When the device starts operation, product a that are supplied one after another by the carrier conveyor A are loaded onto the wide conveyor 1 via vertical conveyors 4, 4 that control product supply, and guided through the conveying-direction sorting guide 2 to the entrance of the mutually facing vertical conveyors 3, 3 of the product-distributing means 5. These vertical conveyors 3, 3 control discharging of products to each row position downstream for distribution. When a predetermined number of (i.e. three) products are discharged, they are stopped temporarily during which time the discharging part moves to the next row position where discharing of the products is continued. The products are distributed into one row after another as the vertical conveyors 3, 3 move perpendicularly to the conveying direction, but when the operation starts, a start button (not shown) is used to place the transporting path of the vertical conveyors at the extreme end row position (leftmost position relative to the running direction) to start distributing products into rows of three pieces each. More specifically, when the discharging outlet of the vertical conveyors 3, 3 discharges three products at the leftmost position of the running direction of the wide conveyor 1, the discharging action is temporarily stopped, while the three discharged products are blocked at the door panel 6a of the first gate 6, which is closed at the start of the operation. However, the vertical conveyors 3, 3 move to the next row position (see Figur 5), and continue moving on to the adjacent position every time three products are discharged. When a row just before the sixth row is filled, i.e. the fifth row from the left end is filled (see Figur 6), the door panels 6a, 6a of the first gate 6 open to the left and right. At this time products a are moved starting from the middle rows (i.e. the third and fourth rows from the left end), and the products in the sixth row (in the rightmost row position) pass the first gate 6 without being blocked by the door panel 6a (see Figur 7). After the six rows of three products each having passed the first gate 6 and the light path of the optical sensors 6₃, 6₃ is interrupted, which are arranged close to the front and rear of the first gate 6, the stacks are blocked and as a result the optical sensors 6₃, 6₃ turn ON. Now the first gate 6 starts closing, and at the same time a new row starts to be filled (see Figur 8). At this time, the second gate 7 descends to open, and the products a... that are collected in six rows of three pieces each are conveyed to the next line where an U-shaped blank (not shown) grasps them and moves them to the shrink-packaging part. After that, rows of three pieces each are made one after another in the reversed direction (see Figur 9). When the fifth row from the right end is completed (see Figur 10), the first gate 6 opens, and as in the previous case, products a are moved one row after another starting from the middle rows. The above-mentioned operation is repeated.

As described above, the device of the present invention distributes products that are supplied one after another from the carrier conveyor A first by the conveying-direction sorting guide 2, and then the conveyed products a that are distributed at a speed relatively faster than that of the first gate 6 are temporarily stored at the product-distributing means 5 to prevent a holdup by accumulation in front of the second gate 7, so that the products a are distributed and collected properly at the second gate 7. After said collection, the second gate 7 descends to unload the products, so that the collected products can be carried to a predetermined after-treatment line (secondary treatment line) at high speed.

Drink packages are used as an example of products to be conveyed in the embodiment in which they are carried by a U-shaped blank to the after-treatment process where shrink-packaging is conducted, but the application of the invention is not restricted to the above embodiment. Bottled cosmetics or any other products to be conveyed can be collected in a predetermined number of multiple rows of a certain number of pieces each for boxing or other after-treatment at high speed by applying the present invention. The invention is especially advantageous for products with a rectangular cross section.

While the invention has been particularly shown and described with reference to a preferred embodiment, it will be understood by those skilled in the art that various changes in form and detail may be made without departing from the scope of the claims.

## Claims

1. A distributing and collecting device for products to be conveyed, which distributes and collects products (a) that are supplied from a carrier conveyor (A) one after another into a predetermined number of rows in sets of a fixed amount, comprising at least:
a) a wide conveyor (1),
b) a conveying-direction sorting guide (2),
c) a product-distributing means (5),
d) a first gate (6), and
e) a second gate (7),
wherein
said wide conveyor (1) has a front end that is connected to the end of the carrier conveyor (A), which carries products (a) in a single row, extends to the product-distributing and collecting area and has a sufficient width to carry a predetermined number of rows of products;
said conveying-direction sorting guide (2) has, near the upper surface of said wide conveyor (1), a front end for receiving products from said carrier conveyor (A) and a rear end for discharging said products, the rear end side thereof is capable of being oscillating;
said first gate (6) opens or closes perpendicularly to the conveying direction above the wide conveyor (1) at a predetermined distance from said product-distributing means (5);
said second gate (7) is disposed at a predetermined distance from the first gate (6) in such a manner that it can move up and down to block the products on the wide conveyor (1); and,
after the products are temporarily stored in multiple rows in sets of a fixed amount at the first gate (6), the gate (6) opens and the second gate (7) distributes and collects the products in sets of a fixed amount into a predetermined number of rows;
**characterized in that**
said product-distributing means (5) has a mutually facing pair of vertical conveyors (3, 3) above the wide conveyor (1);
said front ends of the vertical conveyors (3, 3) are connected to the rear end of said guide (2) and the vertical conveyors (3, 3) convey the products by sandwiching them in the conveying direction at about the same speed and the same direction as said wide conveyor (1), in such a manner that when said vertical conveyors (3, 3) discharge a predetermined number of products beginning from one end row position, the discharging part of the vertical conveyors (3,3) sequentially moves to the row position adjacent to the current row position so as to move reciprocally between the rows at both ends; and
the vertical conveyors (3, 3) can be stopped temporarily when a predetermined number of products are discharged.

2. A distributing and collecting device according to claim 1, wherein said first gate (6) opens to the left and right, and said first gate (6) and said second gate (7) are driven in such a manner that the moving of said vertical conveyors (3, 3) effects products to be discharged from either end row position of the above-mentioned multiple rows and accumulated one after another at each row position in sets of a fixed amount, and when the products are accumulated at a row position preceding another end row position, said first gate (6) opens and at the same time the multiple rows of products pass the gate (6) so that when a predetermined number of products are accumulated at the second gate (7) and detected it is effected that the first gate (6) to close and in turn products are supplied one after another from the other end row position, while on the other hand, the second gate (7) opens to let the accumulated products pass to the next line so that when a predetermined number of products are all transported, the second gate (7) stops the following products by moving upwardly.

3. A distributing and collecting device according to claim 1 or 2, in which said wide conveyor (1) comprises multiple rows of small diameter rollers (1a) having:
a) mutually adjacent shafts (1a₁) that are disposed prependicular to the conveying direction and rotated and driven in the conveying direction; and
b) multiple peripheral rollers (1a₂) that are joined to said shafts (1a₁) in such a manner that they are rotatively driven by friction.

4. A distributing and collecting device according to anyone of claim 1 to 3, wherein said product-distributing means (5) comprises:
a) a pair of mutually facing vertical conveyors (3, 3) that are disposed above the wide conveyor (1) in such a manner that they can move in the direction perpendicular to the conveying direction of said wide conveyor (1), and
b) optical sensors (5₅, 6₃) that are located so that their light path crosses the product-discharging end and wherein when the optical sensors (5₅, 6₃) detect a predetermined number of products, the discharging part of the vertical conveyor (3, 3) moves to the row position adjacent to the current one in said multiple rows.

5. A distributing and collecting device according to anyone of the preceding claim wherein the conveying-direction sorting guide (2) is equipped with mutually facing hinges at the front end and rear end so that the distance between the front end and rear end can be varied with a combination of pipes and shafts.

## Patentansprüche

1. Verteil- und Sammelvorrichtung für zu befördernde Produkte, welche Produkte (a), welche von einem Tragförderer (A) einzeln zugeführt werden, auf eine vorbestimmte Anzahl von Reihen in Sätzen mit einer festen Größe verteilt und sammelt, welche wenigstens folgendes aufweist:
a) einen Breitenförderer (1),
b) eine Förderrichtungs-Sortierführung (2),
c) eine Produkt- Verteilereinrichtung (5),
d) ein erstes Tor (6) und
e) ein zweites Tor (7),
wobei
der Breitenförderer (1) ein vorderes Ende hat, welches mit dem Ende des Tragförderers (A) verbunden ist, welcher die Produkte (a) in einer einzigen Reihe transportiert, der sich zu dem Produktverteil- und Sammelbereich erstreckt, und eine so ausreichende Breite hat, daß eine vorbestimmte Anzahl von Reihen von Produkten getragen werden kann;
die Förderrichtungs-Sortierführung (2) in der Nähe der oberen Fläche des Breitenförderers (1) ein vorderes Ende zur Aufnahme von Produkten von dem Tragförderer (A) und ein hinteres Ende zur Abgabe der Produkte hat, wobei die hintere Endseite hiervon eine Oszillationsbewegung ausführen kann;
das erste Tor (6) senkrecht zur Förderrichtung oberhalb des Breitenförderers (1) in einem vorbestimmten Abstand von der Produkt-Verteilereinrichtung (5) öffnet oder schließt;
das zweite Tor (7) in einem vorbestimmten Abstand von dem ersten Tor (6) derart angeordnet ist, daß es sich nach oben und unten bewegen kann, um die Produkte auf dem Breitenförderer (1) anzuhalten; und
nach dem zeitweiligen Anordnen der Produkte in einer Mehrzahl von Reihen mit Sätzen einer festen Größe an dem ersten Tor (6) das erste Tor öffnet und das zweite Tor (7) die Erzeugnisse in Sätzen mit einer festen Größe und mit einer vorbestimmten Anzahl von Reihen sammelt;
**dadurch gekennzeichnet**, daß
die Produkt-Verteilereinrichtung (5) ein wechselweise zugewandtes Paar von vertikalen Förderern (3, 3) oberhalb des Breitenförderers (1) hat;
die vorderen Enden der vertikalen Förderer (3, 3) mit dem hinteren Ende der Führung (2) verbunden sind und die vertikalen Förderer (3, 3) die Produkte unter Zwischenlage zwischen denselben in Förderrichtung mit etwa der gleichen Geschwindigkeit und in die gleiche Richtung wie der Breitenförderer (1) derart transportieren, daß, wenn die vertikalen Förderer (3, 3) eine vorbestimmte Anzahl von Produkten, ausgehend von einer Endreihenposition, abgeben, sich der abgebende Teil der vertikalen Förderer (3, 3) sequentiell zu der Reihenposition für die nächste an die momentane Reihenposition angrenzende Position derart bewegt, daß sie sich hin- und hergehend zwischen den Reihen an beiden Enden bewegen können; und
die vertikalen Förderer (3, 3) zeitweilig gestoppt werden können, wenn eine vorbestimmte Anzahl von Produkten abgegeben worden ist.

2. Verteil- und Sammelvorrichtung nach Anspruch 1, bei der das erste Tor (6) nach links und rechts öffnet, und das erste Tor (6) und das zweite Tor (7) derart betrieben werden, daß die Bewegung der vertikalen Förderer (3, 3) bewirkt, daß Produkte von der jeweiligen Endreihenposition der vorstehend beschriebenen Mehrzahl von Reihen abgegeben und einzeln in der jeweiligen Reihenposition in Sätzen mit einer fest vorgegebenen Größe gesammelt werden, und daß dann, wenn die Produkte auf einer Reihenposition, welche einer weiteren Endreihenposition vorangeht, gesammelt worden sind, das erste Tor (6) öffnet, und zugleich die Mehrzahl von Reihen von Produkten durch das Tor (6) gehen, so daß dann, wenn eine vorbestimmte Anzahl von Produkten an dem zweiten Tor (7) gesammelt worden ist, und dies festgestellt worden ist, bewirkt wird, daß das erste Tor (6) schließt, und Produkte einerseits einzeln von der anderen Endreihenposition zugeführt werden, während andererseits das zweite Tor (7) öffnet, um die angesammelten Produkte zu der nächsten Bearbeitungsstraße durchzulassen, so daß dann, wenn eine vorbestimmte Anzahl von Produkten transportiert worden ist, das zweite Tor (7) die folgenden Produkte durch eine Bewegung in Richtung nach oben stoppt.

3. Verteil- und Sammelvorrichtung nach Anspruch 1 oder 2, bei der der Breitenförderer (1) eine Mehrzahl von Reihen mit Rollen (1a) mit kleinem Durchmesser aufweist, welche folgendes haben:
a) wechselweise benachbarte Achsen (1a₁), welche senkrecht zu der Förderrichtung angeordnet sind, und welche in Förderrichtung eine Drehbewegung ausführen und angetrieben sind; und
b) eine Mehrzahl von Umfangsrollen (1a₂), welche mit den Wellen (1a₁) derart verbunden sind, daß sie mittels Reibschluß drehangetrieben sind.

4. Verteil- und Sammelvorrichtung nach einem der Ansprüche 1 bis 3, bei der die Produkt-Verteilereinrichtung (5) folgendes aufweist:
a) ein Paar von wechselweise zugewandten, vertikalen Förderern (3, 3), welche oberhalb des Breitenförderers (1) derart angeordnet sind, daß es sich in eine Richtung senkrecht zu der Förderrichtung des Breitenförderers (1) bewegen können, und
b) optische Sensoren (5₅, 6₃), welche derart angeordnet sind, daß ihr Lichtweg das Produkt-Abgabeende schneidet, wobei die Auslegung derart getroffen ist, daß, wenn die optischen Sensoren (5₅, 6₃) eine vorbestimmte Anzahl von Produkten feststellen, das Abgabeteil des vertikalen Förderers (3, 3) zu der Reihenposition bewegt wird, welche der momentanen Position in der Mehrzahl von Reihen benachbart ist.

5. Verteil- und Sammelvorrichtung nach einem der vorangehenden Ansprüche, bei der die Förderrichtungs-Sortierführung (2) wechselweise zugeordnete Gelenke am vorderen und hinteren Ende hat, so daß der Abstand zwischen dem vorderen Ende und dem hinteren Ende mit Hilfe einer Kombination aus Rohren und Stangen verändert werden kann.

## Revendications

1. Dispositif de distribution et de collecte de produits devant être transportés, qui distribue et collecte des produits (a) qui arrivent d'un transporteur d'amenée (A), les uns à la suite des autres en un nombre prédéterminé de rangées, en groupes d'une quantité fixe, comportant au moins :
a) un transporteur large (1),
b) un guide (2) de sélection d'une direction de transport,
c) un moyen (5) de distribution de produits,
d) une première porte (6), et
e) une seconde porte (7),
dans lequel
ledit transporteur large (1) comporte une extrémité avant qui est reliée à l'extrémité du transporteur d'amenée (A), qui amène les produits (a) en une seule rangée, s'étend jusqu'à la zone de distribution et de collecte de produits et a une largeur suffisante pour porter un nombre prédéterminé de rangées de produits ;
ledit guide (2) de sélection de direction de transport comporte, à proximité de la surface supérieure dudit transporteur large (1), une extrémité avant destinée à recevoir des produits provenant dudit transporteur d'amenée (A) et une extrémité arrière destinée à décharger lesdits produits, son côté extrême arrière pouvant osciller ;
ladite première porte (6) s'ouvre ou se ferme perpendiculairement à la direction de transport au-dessus du transporteur large (1) à une distance prédéterminée dudit moyen (5) de distribution de produits ;
ladite seconde porte (7) est disposée à une distance prédéterminée de la première porte (6) de manière qu'elle puisse monter et descendre pour arrêter les produits sur le transporteur large (1) ; et
après que les produits ont été stockés temporairement en rangées multiples, en groupes d'une quantité fixe, à la première porte (6), la porte (6) s'ouvre et la seconde porte (7) distribue et collecte les produits en groupes d'une quantité fixe, pour former un nombre prédéterminé de rangées ;
caractérisé en ce que
ledit moyen (5) de distribution de produits comporte deux transporteurs verticaux (3, 3) mutuellement face à face au-dessus du transporteur large (1) ;
lesdites extrémités avant des transporteurs verticaux (3, 3) sont reliées à l'extrémité arrière dudit guide (2) et les transporteurs verticaux (3, 3) transportent les produits en les serrant entre eux dans la direction de transport sensiblement à la même vitesse et dans la même direction que ledit transporteur large (1), de manière que, lorsque lesdits transporteurs verticaux (3, 3) déchargent un nombre prédéterminé de produits en commençant à partir d'une position d'une rangée extrême, la partie de déchargement des transporteurs verticaux (3, 3) se déplace séquentiellement vers la position d'une rangée adjacente à la position de la rangée en cours pour exécuter un mouvement alternatif entre les rangées aux deux extrémités ; et
les transporteurs verticaux (3, 3) peuvent être arrêtés temporairement lorsqu'un nombre prédéterminé de produits est déchargé.

2. Dispositif de distribution et de collecte selon la revendication 1, dans lequel ladite première porte (6) s'ouvre vers la gauche et vers la droite, et ladite première porte (6) et ladite seconde porte (7) sont entraînées de manière que le mouvement desdits transporteurs verticaux (3, 3) provoque le déchargement des produits à partir de chaque position de rangées extrêmes des rangées multiples précitées et leur accumulation les uns après les autres dans chaque position de rangée en groupes d'une quantité fixe, et lorsque les produits sont accumulés dans une position de rangées précédant une autre position de rangées extrêmes, ladite première porte (6) s'ouvre et, simultanément, les rangées multiples de produits franchissent la porte (6) afin que, lorsqu'un nombre prédéterminé de produits est accumulé à la seconde porte (7) et est détecté, on ferme la première porte (6) et, à leur tour, des produits arrivent les uns après les autres de l'autre position de rangées extrêmes, tandis que, par ailleurs, la seconde porte (7) s'ouvre pour laisser les produits accumulés passer vers la ligne suivante afin que, lorsque la totalité d'un nombre prédéterminé de produits est transportée, la seconde porte (7) arrête les produits suivants en se déplaçant vers le haut.

3. Dispositif de distribution et de collecte selon la revendication 1 ou 2, dans lequel ledit transporteur large (1) comporte des rangées multiples de rouleaux (la) de faible diamètre ayant :
a) des axes (1a₁) mutuellement adjacents qui sont disposés perpendiculairement à la direction de transport et qui sont mis en rotation et entraînés dans la direction de transport ;
b) des rouleaux périphériques multiples (1a₂) qui sont reliés auxdits axes (1a₁) de manière à être entraînés en rotation par frottement.

4. Dispositif de distribution et de collecte selon l'une quelconque des revendications 1 à 3, dans lequel ledit moyen (5) de distribution de produits comporte :
a) deux transporteurs verticaux (3, 3) mutuellement face à face qui sont disposés au-dessus du transporteur large (1) de manière qu'ils puissent se déplacer dans la direction perpendiculaire à la direction de transport dudit transporteur large (1), et
b) des capteurs optiques (5₅, 6₃) qui sont placés de façon que leurs chemins lumineux coupent l'extrémité de déchargement de produits, et dans lequel lorsque les capteurs optiques (5₅, 6₃) détectent un nombre prédéterminé de produits, la partie de déchargement du transporteur vertical (3, 3) se déplace vers la position de rangées adjacente à celle en cours dans lesdites rangées multiples.

5. Dispositif de distribution de collecte selon l'une quelconque des revendications précédentes, dans lequel le guide (2) de sélection de direction de transport est équipé de charnières mutuellement face à face à l'extrémité avant et à l'extrémité arrière afin que la distance entre l'extrémité avant et l'extrémité arrière puisse être modifiée avec une combinaison de conduits et d'axes.
